# EUROPÄISCHE PATENTSCHRIFT

(11) **EP 1 308 748 B1**
(45) Veröffentlichungstag und Bekanntmachung des Hinweises auf die Patenterteilung: **01.12.2004**
(21) Anmeldenummer: 02021607.3
(22) Anmeldetag: 27.09.2002
(51) Int. Cl.: G01S 13/78, F41G 7/22

(54) **Optischer Sensor mit einem Sensorstrahlengang und einem parallel zu der optischen Achse des Sensorstrahlenganges emittierenden Laserstrahler**
Optical sensor with an optical path and a laser transmitting a beam parallel to the optical axis of the optical path
Capteur optique avec un trajet optique et un laser transmettant un faisceau parallèle à l'axe optique du trajet optique

(30) Priorität: 30.10.2001 DE 10153094
(43) Veröffentlichungstag der Anmeldung: 07.05.2003
(73) Patentinhaber: Bodenseewerk Gerätetechnik GmbH, 88662 Überlingen (DE)
(72) Erfinder: Baumann, Rainer, 88662 Überlingen (DE); Gross, Michael, Dr., 88682 Salem (DE); Kempas, Hagen, 88662 Überlingen (DE)
(74) Vertreter: Diehl Patentabteilung

(56) Entgegenhaltungen:
- DE-A- 3 317 232
- US-A- 4 087 061

## Beschreibung

Die Erfindung betrifft eine optische Sensoranordnung, nach dem Oberbegriff des Anspruchs 1.

Insbesondere betrifft die Erfindung einen Rundumsucher mit einem ein Gesichtsfeld abtastenden Sensorstrahlengang und einem Laser, der einen Laserstrahl jeweils parallel zu der momentanen optischen Achse des Sensorstrahlenganges aussendet.

Die Erfindung betrifft insbesondere eine Vorrichtung zum Erfassen von anfliegenden Lenkflugkörpern mit optischem Suchkopf und zur Erzeugung eines auf den Suchkopf eines solchen Lenkflugkörpers gerichteten Laserstrahls, enthaltend einen Rundumsucher mit einem auf thermische Strahlung des Lenkflugkörpers ansprechenden Sensor und einen Laser, der auf einen von dem Sensor erfaßten Lenkflugkörper ausrichtbar ist.

Lenkflugkörper weisen einen Suchkopf mit einem üblicherweise auf infrarote Strahlung ansprechenden Detektor auf, der ein anzugreifendes Ziel, z.B. ein Kampfflugzeug, erfaßt und Lenksignale liefert, welche den Lenkflugkörper zu dem Ziel lenken. Um sich gegen solche Lenkflugkörper zu schützen, ist an dem Ziel eine Einrichtung vorgesehen, welche anfliegende Lenkflugkörper erfaßt. Es ist bekannt, hierfür einen "Rundumsucher" zu verwenden. Ein solcher Rundumsucher enthält einen Sensor, der auf die thermische Strahlung des Lenkflugkörpers anspricht. Ein abbildendes optisches System, welches das Bild einer Objektszene auf dem Sensor erzeugt, tastet laufend einen großen Raumwinkel ab. Wenn ein anfliegender Lenkflugkörper erkannt wird, müssen "Gegenmaßnahmen" getroffen werden. Eine solche Gegenmaßnahme besteht darin, beim Erkennen eines anfliegenden Lenkflugkörpers einen hochintensiven Laserstrahl auf den Suchkopf dieses Lenkflugkörpers zu richten. Dadurch wird der Sensor des Suchkopfes "geblendet" und ggf. zerstört. Der Suchkopf des Lenkflugkörpers "sieht" dann das Ziel nicht mehr. Ein Kampfflugzeug als Ziel kann dann durch Ausweichmanöver einen Treffer verhindern.

Entsprechend könnte auch an dem Flugkörper eine Anordnung der vorerwähnten Art mit Rundumsucher und Laser vorgesehen sein, um Sensoren des angegriffenen Flugzeugs, mittels derer das Flugzeug den anfliegenden Flugkörper entdeckt, außer Betrieb zu setzen und damit Ausweichmanöver zu erschweren.

Durch die DE 33 17 232 A1 ist ein Suchkopf für zielsuchende Flugkörper bekannt, bei welchem ein Sensor zusammen mit einem abbildenden optischen System auf einem Nickrahmen angeordnet ist. Der Nickrahmen ist seinerseits an einem Rollrahmen um eine Nickachse schwenkbar gelagert. Der Rollrahmen ist um eine mit der Längsachse des Flugkörpers zusammenfallende Rollachse drehbar. Auf dem Nickrahmen sitzen weiterhin Abstandssensoren in Form von Laser-Sende- und -Empfangseinheiten angeordnet. Dabei sind zwei solche Abstandssensoren auf gegenüberliegenden Seiten der Nickachse angeordnet, um sicherzustellen, daß bei großen Schielwinkeln höchstens einer der Abstandssensoren abgedeckt werden kann.

Durch die US 4,087,061 ist ein Weitwinkelsucher für Flugkörper bekannt. Dieser Weitwinkelsucher weist einen um die Längsachse des Flugkörpers als Rollachse drehbaren Rollrahmen und einen Nickrahmen auf, der an dem Rollrahmen um eine zu der Rollachse senkrechte Nickachse schwenkbar gelagert ist. Auf dem Nickrahmen sitzt ein abbildendes optisches System. Der Strahlengang ist dabei über Umlenkspiegel so geführt, daß auf einem Abschnitt längs der Nickachse und auf einem anderen Abschnitt längs der Rollachse verläuft. Dadurch kann ein Bild einer Objektszene unabhängig von der Ausrichtung des abbildenden optischen Systems auf einem stillstehenden Sensor erzeugt werden. Ein Laserstrahler ist dort nicht vorgesehen.

Der Erfindung liegt die Aufgabe zu Grunde, eine vorteilhafte Konstruktion für eine Vorrichtung der eingangs genannten Art zu schaffen, bei welcher Sensor und Laserstrahler strukturfest angeordnet sind, Sensorstrahlengang und Laserstrahlengang sauber getrennt sind, so daß kein unerwünschtes Störlicht von dem Laserstrahlengang in den Sensorstrahlengang gelangen kann, und der Laserstahl stets parallel zu der optischen Achse des objektseitigen Strahlenganges ausgerichtet ist

Die erfindungsgemäße Konstruktion ist dadurch gekennzeichnet, daß
(a) der Sensor strukturfest angeordnet ist,
(b) das abbildende optische System auf der Roll-Nick-Rahmenanordnung Strahlenumlenkmittel enthält, durch welche der Sensorstrahlengang in einem Abschnitt längs der Nickachse und in einem anderen Abschnitt in einer Strahleneinfallsrichtung längs der Rollachse geführt ist derart, daß durch das optische System bei jeder Stellung der Roll-Nick-Rahmenanordnung ein Bild der Objektszene auf dem strukturfesten Sensor erzeugbar ist,
(c) der Laserstrahler ebenfalls strukturfest angeordnet ist und
(d) auf der Roll-Nick-Rahmenanordnung ein Laser-Spiegelsystem angeordnet ist, in welchem
   - der Laserstrahl des Laserstrahlers in einem Abschnitt in der Verlängerung der Strahleneinfallsrichtung in dem optischen System längs der Rollachse verläuft,
   - auf einem mit dem Rollrahmen verdrehbaren Träger ein erster und ein zweiter Laserspiegel angeordnet sind, wobei
   - der erste Laserspiegel von der Rollachse durchstoßen wird und unter 45° zu dieser geneigt angeordnet ist, so daß der Laserstrahl längs der Rollachse auf diesen ersten Laserspiegel fällt und von diesem um 90° radial auf den zweiten Laserspiegel abgelenkt wird,
   - die Ebene des zweiten Laserspiegels senkrecht zu der des ersten Laserspiegels verläuft, so daß der Laserstrahl um 90° umgelenkt und parallel zu der Rollachse im Abstand von dieser verläuft,
   - in dem Rollrahmen ein dritter Laserspiegel gehaltert ist, dessen Ebene senkrecht zu der von Roll- und Nickachse aufgespannten Ebene und unter 45° zu dem durch den zweiten Laserspiegel umgelenkten Laserstrahl angeordnet ist und der von diesem umgelenkten Laserstrahl auf der Nickachse getroffen wird, so daß er den Laserstrahl längs der Nickachse radial auswärts umlenkt und
   - an dem Nickrahmen ein vierter Laserspiegel gehaltert ist, der senkrecht zu der von Nickachse und objektseitigem Abschnitt der optischen Achse aufgespannten Ebene unter 45° zu der Nickachse angeordnet ist, so daß er von dem längs der Nickachse radial auswärts umgelenkten Laserstrahl getroffen wird und den Laserstrahl seitlich von dem abbildenden optischen System in eine zu dem Abschnitt der optischen Achse parallele Richtung umgelenkt wird.

Die Erfindung sieht somit eine Roll- Nick- Rahmenanordnung vor. Eine solche Rahmenanordnung gestattet -anders als eine übliche Nick- Gier- Rahmenanordnunggroße Winkel zwischen der objektseitigen optischen Achse des abbildenden optischen Systems und der Rollachse. Es kann also ein großer Raumwinkel von z.B. 2π, also 180° in jeder Radialebene, von dem Rundumsuchgerät erfaßt werden. Sowohl der Sensor als auch der Laser sind strukturfest angeordnet, was die Stromversorgung und den Abgriff von Signalen vereinfacht. Sowohl die von dem Ziel ausgehende, auf den Sensor geleitete Strahlung als auch der Laserstrahl werden über optische Glieder auf der Roll- Nick-Rahmenanordnung geleitet, so daß eine parallele Ausrichtung von objektseitiger, optischer Achse und Laserstrahl gewährleistet werden kann. Dadurch wird der Laserstrahl z.B automatisch auf einen von dem abbildenden optischen System erfaßten Lenkflugkörper gerichtet.

Ausgestaltungen der Erfindung sind Gegenstand der Unteransprüche.

Ein Ausführungsbeispiel der Erfindung ist nachstehend unter Bezugnahme auf die zugehörige Zeichnung näher erläutert, die einen Längsschnitt einer Vorrichtung mit Rundumsucher und Laser hinter einem strukturfesten, kugelförmigen Fenster ("Dom") zeigt.

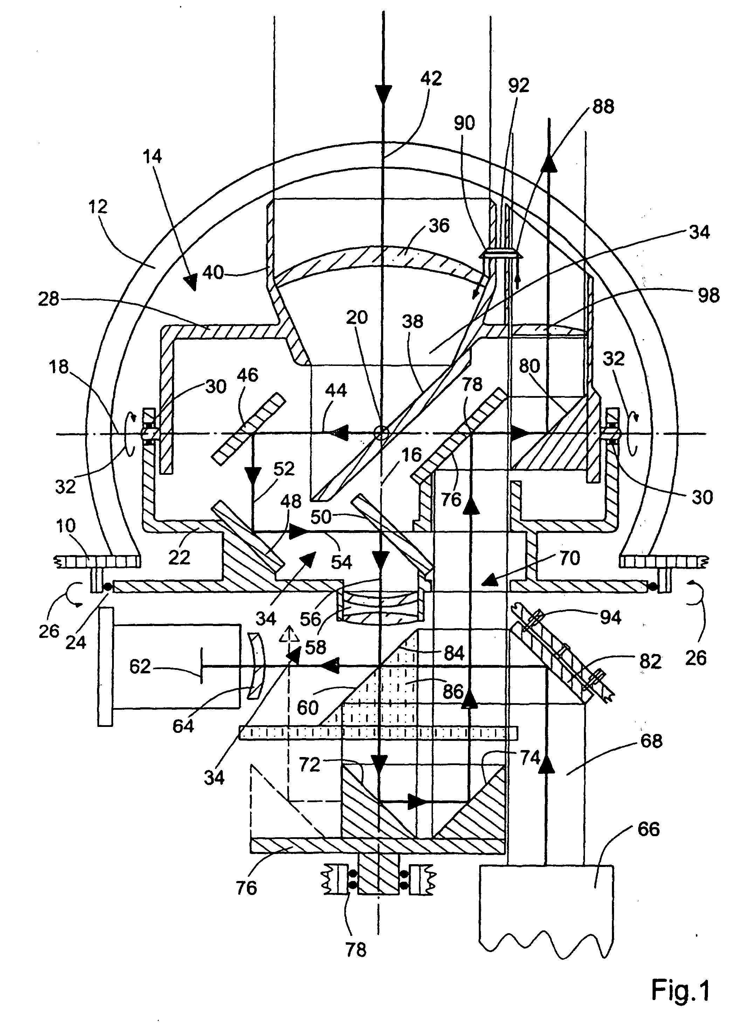

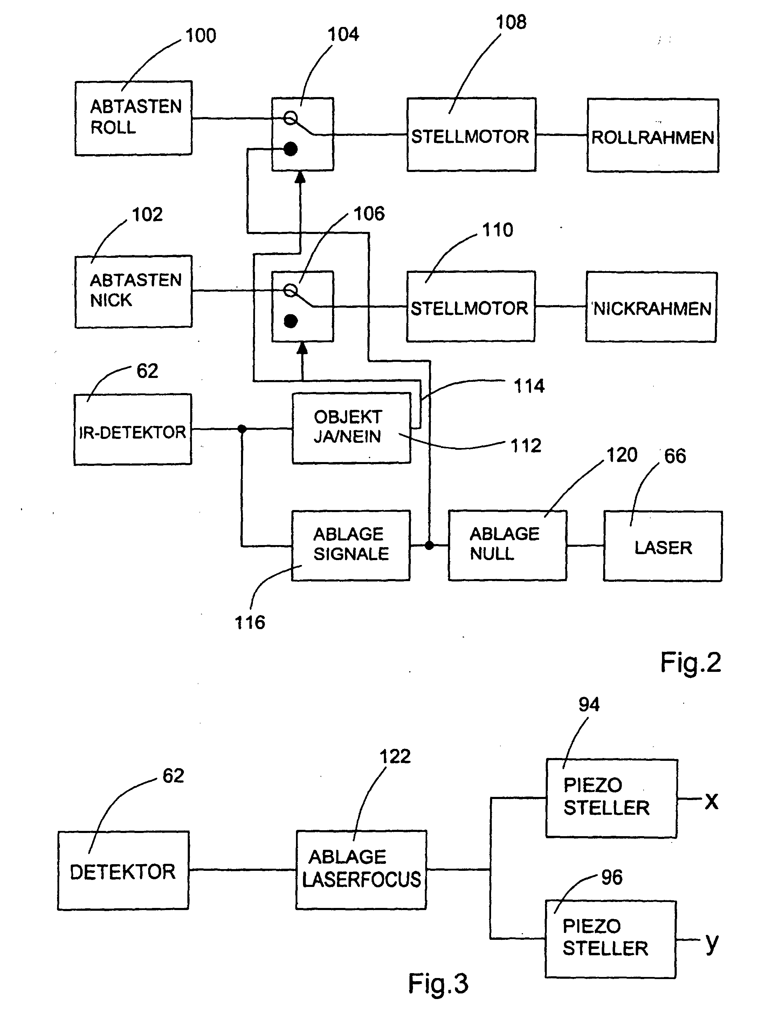

In der Figur ist mit 10 eine Struktur, z.B. die Zelle eines Kampfflugzeuges, bezeichnet. In der Struktur 10 sitzt ein im wesentlichen kugelförmiges Fenster oder ein "Dom" 12. Innerhalb des Domes 12 ist eine Roll- Nick- Rahmenanordnung angeordnet, die generell mit 14 bezeichnet ist. Die Roll- Nick- Rahmenanordnung 14 definiert eine strukturfeste Rollachse 16 und eine zu der Rollachse 16 senkrechte Nickachse 18. Der Dom 12 ist um den Schnittpunkt 20 von Roll- und Nickachse 16 bzw. 18 gekrümmt.

Die Roll- Nick- Rahmenanordnung 14 enthält einen Rollrahmen 22. Der Rollrahmen 22 ist in schematisch dargestellten Lagern 24 um die Rollachse 16 drehbar in der Struktur 10 gelagert. Das ist in der Figur durch Pfeile 26 angedeutet. In dem Rollrahmen 22 ist ein Nickrahmen 28 in Lagern 30 um die Nickachse 18 schwenkbar gelagert. Das ist in der Figur durch Pfeile 32 angedeutet.

Auf dem Nickrahmen 28 sitzt ein Nickrahmen-Systemteil 34A eines abbildenden optischen Systems, das generell mit 34bezeichnet ist. Der Systemteil 34A enthält ein Primärobjektiv 36, das hier der Einfachheit halber als eine Linse dargestellt ist, und eine erste reflektierende Fläche 38. Das Primärobjektiv 36 sitzt in einer Fassung 40 an dem Nickrahmen 28. Das Primärobjektiv 36 definiert eine objektseitige optische Achse 42. Die optische Achse 42 geht durch den Schnittpunkt 20 von Roll- und Nickachse 16 bzw. 18 und ist senkrecht zu der Nickachse 18. Die Ebene der ersten reflektierenden Fläche 38 erstreckt sich senkrecht zu der von Nickachse 18 und optischer Achse 42 aufgespannten Ebene und bildet mit der objektseitigen optischen Achse 42 und mit der Nickachse 18 jeweils einen Winkel von 45°. Der Strahlengang des Primärobjektivs 36 wird dadurch um 90° umgelenkt. Die von der Fläche 38 umgelenkte optische Achse 44 fällt mit der Nickachse 18 zusammen.

Ein Rollrahmen-Systemteil 34B enthält drei reflektierende Flächen, eine zweite reflektierende Fläche 46, eine dritte reflektierende Fläche 48 und eine vierte reflektierende Fläche 50. Die Ebene der zweiten reflektierenden Fläche 46 ist senkrecht zu der von Roll- und Nickachse 16 bzw. 18 aufgespannten Ebene und bildet mit der die Fläche 46 treffenden, einmal umgelenkten optischen Achse 44 einen Winkel von 45°. Dadurch wird der Strahlengang des abbildenden optischen Systems 34 um weitere 90° umgelenkt. Die zweimal umgelenkte optische Achse 52 verläuft dann parallel zu der Rollachse 16. Die Ebene der dritten reflektierenden Fläche 48 ist wieder senkrecht zu der von Roll- und Nickachse 16 bzw. 18 aufgespannten ebene und bildet mit der zweimal umgelenkten optischen Achse 52 einen Winkel von 45°. Dadurch wird der Strahlengang des abbildenden optischen Systems 34 noch einmal um 90° einwärts zu der Rollachse 16 hin umgelenkt. Die drei Mal umgelenkte optische Achse 54 verläuft parallel zu der Nickachse 18. Die Ebene der vierten reflektierenden Fläche 50 liegt parallel zu der Ebene der dritten reflektierenden Fläche. Die Flächen 48 und 50 sind einander zugewandt. Die drei Mal umgelenkte optische Achse 54 trifft die reflektierende Fläche 50 auf der Rollachse 16. Dadurch wird der Strahlengang nochmals um 90° nach unten in der Figur umgelenkt. Die vier Mal umgelenkte optische Achse 56 des Strahlenganges fällt mit der Rollachse 16 zusammen. Das ist unabhängig von den Winkellagen von Roll- und Nickrahmen 16 bzw. 18. Der Rollrahmen Systemteil 34B enthält weiterhin eine Linsenanordnung 58. Die optische Achse der Linsenanordnung 58 fällt mit der Rollachse 16 zusammen. Von dem Primärobjektiv 36 wird ein Zwischenbild einer Objektszene zwischen der vierten reflektierenden Fläche 50 und der Linsenanordnung 58 erzeugt.

Mit 60 ist eine strukturfeste fünfte reflektierende Fläche bezeichnet. Die fünfte reflektierende Fläche 60 ist unter 45° zu der Rollachse 16 angeordnet. Die fünfte reflektierende Fläche lenkt den Strahlengang von der Rollachse 16 um 90° radial nach außen auf denen strukturfesten, infrarotempfindlichen Sensor 62. Der Sensor 62 ist vorzugsweise ein bildauflösender Sensor in Form einer zweidimensionalen Anordnung von Sensorelementen. Vor dem Sensor sitzt eine Linse 64. Die Linsenanordnung 58 und die Linse 64 bilden ein dreilinsiges Sensorobjektiv, durch welches das Zwischenbild auf den Sensor 62 abgebildet wird.

Der Sensor 62 wird in üblicher Weise durch einen Joule-Thomson-Kühler auf eine niedrige Temperatur gekühlt. Eine mit gekühlte Blende (Kaltblende) hält die von der warmen Umgebung direkt auf den Sensor fallende Wärmestrahlung ab. Die Eintrittspupille des abbildenden optischen Systems 34 kann in die Nähe der ersten Linse des Primärobjektivs gelegt werden. Durch geeignete Abbildung dieser Eintrittspupille durch die nachfolgenden Linsen kann das Bild der Eintrittspupille in die Ebene der Kaltblende gelegt werden, wobei das Bild der Eintrittspupille mit der Kaltblende zusammenfällt. Damit wird die Effektivität der Kaltblende 100%.

Ein Laser 66 erzeugt einen hochintensiven Laserstrahl 68. Der Laser 66 ist im Abstand seitlich von der Rollachse 16 angeordnet. Der Laserstrahl 68 verläuft vorzugsweise im wesentlichen parallel zu der Rollachse 16.

Der Laserstrahl 68 wird über ein Laser-Spiegelsystem geleitet, das generell mit 70 bezeichnet ist. Das Laser-Spiegelsystem enthält einen ersten Laserspiegel 72 und einen zweiten Laserspiegel 74. Die beiden Laser-Spiegel 72 und 74 sind auf einem Träger 76 angeordnet. Der Träger 76 ist in Lagern 78 um die Rollachse 16 drehbar gelagert. Der Träger 76 wird durch einen Nachführantrieb oder ein (nicht dargestelltes Getriebe) der Drehung des Rollrahmens 22 um die Rollachse 16 nachgeführt. Die Anordnung der Laserspiegel 72 und 74 auf einem gesonderten Träger hat lediglich konstruktive Gründe. Der erste Laserspiegel 72 wird von der Rollachse 16 durchstoßen und ist unter 45° zu der Rollachse 16 angeordnet. Der zweite Laserspiegel 74 ist im Abstand von der Rollachse 16 angeordnet. Die Ebene des zweiten Laserspiegels 74 ist senkrecht zur Ebene des ersten Laserspiegels 72. Auf diese Weise wird ein längs der Rollachse 16 einfallender Laserstrahl durch den ersten Laserspiegel um 90° umgelenkt und fällt radial auf den zweiten Laserspiegel 74. Der zweite Laserspiegel 74 lenkt einen solchen Laserstrahl nochmals um 90° nach oben in der Figur um, so daß der Laserstrahl parallel zu der Rollachse läuft. Der Laserstrahl fällt dann auf einen dritten rollrahmenfesten Laserspiegel 76. Der Auftreffpunkt 78 des Laserstrahls auf den Laserspiegel 76 liegt auf der Nickachse 18. Die Ebene des dritten Laserspiegels 76 ist parallel zu der Ebene des zweiten Laserspiegels 74. Durch den dritten Laserspiegel 76 wird daher der Laserstrahl umgelenkt. Der Laserstrahl läuft dann längs der Nickachse 18. Der Laserstrahlt trifft auf einen vierten nickrahmenfesten Laserspiegel 80. Die Ebene des vierten Laserspiegels verläuft senkrecht zu der von Nickachse 18 und objektseitiger optischer Achse 42 aufgespannten Ebene und unter 45° zu der Nickachse 18 und dem vom Laserspiegel 76 umgelenkten Laserstrahl. Dadurch wird der Laserstrahl nochmals um 90° umgelenkt, derart, daß er auch bei einer Verschwenkung des Nickrahmens 28 aus der dargestellten Lage stets parallel zur optischen Achse 42 ausgesandt wird.

Der Laser könnte auf der Rollachse 16 angeordnet sein und den Laserstrahl unmittelbar längs der Rollachse 16 auf den ersten Laserspiegel 72 leiten. Bei der bevorzugten Ausführung wird wird Laserstrahl 68 von dem seitlich angeordneten Laser 66 auf einen fünften Laserspiegel 82 geleitet. Der fünfte Laserspiegel ist strukturfest angeordnet. Die Ebene des fünften Laserspiegels ist senkrecht zu der durch Rollachse 16 und ausgesandtem Laserstrahl 68 definierten Ebene und unter 45° zu dem Laserstrahl 68 angeordnet. Dadurch wird der Laserstrahl um 90° einwärts zu der Rollachse 16 umgelenkt. Ein sechster Laserspiegel 84 ist strukturfest senkrecht zu der von der Achse des Laserstrahls 68 und der Rollachse 16 aufgespannten Ebene unter 45° zu der Richtung des umgelenkten Laserstrahls angeordnet und wird von diesem im wesentlichen auf der Rollachse 16 getroffen, so daß er den Laserstrahl um 90° auf den ersten Laserspiegel 72 umlenkt. Bei der dargestellten Ausführung liegen die fünfte reflektierende Fläche 60 des abbildenden Strahlenganges und der sechste Laserspiegel 84 im wesentlichen in einer Ebene. Sie werden von einer Hypothenusenfläche eines rechtwinklig-gleichschenkligen Prismas 86 gebildet.

Das abbildende optische System 34 weist ein die objektseitige optische Achse 42 definierendes, nickrahmenfestes Primärobjektiv 36 auf. Das Laser-Spiegelsystem 70 leitet den Laserstrahl 68 seitlich an diesem Primärobjektiv 36 vorbei. Ein Teilstrahl des ausgesandten Laserlichts wird durch in einen Teil des Laserstrahl ragende, bündelumkehrende Mittel antiparallel auf das Primärobjektiv 36 geleitet, derart, daß durch diesen Teilstrahl durch das abbildende optische System 34 ein Lichtfleck in der Ebene des Sensors (62) erzeugt wird. In dem Laser-Spiegelsystem 70 sind Ausriclatmittel vorgesehen, die von einer Abweichung des Lichtflecks von einer Sollposition ansteuerbar sind und durch welche der Laserstrahl 68 genau parallel zu der objektseitigen optischen Achse 42 ausrichtbar ist. Die bündelumkehrenden Mittel weisen zwei zueinander senkrechte, reflektierende Flächen 88 und 90 auf, von denen eine in dem Laserstrahl 68 und die andere in den objektseitigen Strahlengang des abbildenden optischen Systems 34 eintaucht, so daß ein an der einen Fläche 88 reflektierter Teil des Laserstrahls 68 durch die andere Fläche antiparallel zu dem Laserstrahl 68 in den Strahlengang des abbildenden optischen Systems 34 eingespiegelt wird. Die Ausrichtmittel sind von einem durch Piezosteller 94 und 96 mit zwei Freiheitsgraden winkelverstellbaren Spiegel 82 gebildet, über den der Laserstrahl geleitet wird.

Zwischen dem vierten Laserspiegel 80 und dem Dom 12 ist im Strahlengang des Laserstrahls 68 eine außeraxiale Korrekturlinse 98 zur Korrektur des durch den Dom 12 hervorgerufenen Linsenfehlers angeordnet.

## Patentansprüche

1. Optische Sensoranordnung, enthaltend: einen Sensor, ein abbildendes optisches System, das einen Sensorstrahlengang mit einer optischen Achse definiert und auf eine auf dem objektseitigen Abschnitt der optischen Achse liegende Objektszene ausgerichtet ist, einen Laserstrahler, der einen zu der optischen Achse des Sensorstrahlenganges parallelen Laserstrahl aussendet, und
eine Roll-Nick-Rahmenanordnung (14) mit einem um eine Rollachse (16) gegenüber einer Struktur (10) drehbaren Rollrahmen (22) und einem Nickrahmen vorgesehen ist, der um eine zu der Rollachse (16) senkrechte Nickachse (18) gegenüber dem Rollrahmen (22) schwenkbar ist,
**dadurch gekennzeichnet, daß**
(a) der Sensor (62) strukturfest angeordnet ist,
(b) das abbildende optische System (34) auf der Roll-Nick-Rahmenanordnung (14) Strahlenumlenkmittel (38) enthält, durch welche der Sensorstrahlengang in einem Abschnitt längs der Nickachse (18) und in einem anderen Abschnitt in einer Strahleneinfallsrichtung längs der Rollachse (16) geführt ist derart, daß durch das optische System bei jeder Stellung der Roll-Nick-Rahmenanordnung (14) ein Bild der Objektszene auf dem strukturfesten Sensor (62) erzeugbar ist,
(c) der Laserstrahler (66) ebenfalls strukturfest angeordnet ist und
(d) auf der Roll-Nick-Rahmenanordnung (14) ein Laser-Spiegelsystem (70) angeordnet ist, in welchem
- der Laserstrahl des Laserstrahlers in einem Abschnitt in der Verlängerung der Strahleneinfallsrichtung in dem optischen System längs der Rollachse (16) verläuft,
- auf einem mit dem Rollrahmen verdrehbaren Träger (76) ein erster und ein zweiter Laserspiegel (72 bzw. 74) angeordnet sind, wobei
- der erste Laserspiegel (72) von der Rollachse (16) durchstoßen wird und unter (45°) zu dieser geneigt angeordnet ist, so daß der Laserstrahl (68) längs der Rollachse (16) auf diesen ersten Laserspiegel (72) fällt und von diesem um 90° radial auf den zweiten Laserspiegel (74) abgelenkt wird,
- die Ebene des zweiten Laserspiegels (74) senkrecht zu der des ersten Laserspiegels (72) verläuft, so daß der Laserstrahl (68) um 90° umgelenkt und parallel zu der Rollachse (16) im Abstand von dieser verläuft,
- in dem Rollrahmen ein dritter Laserspiegel (76) gehaltert ist, dessen Ebene senkrecht zu der von Roll- und Nickachse (16 bzw. 18) aufgespannten Ebene und unter 45° zu dem durch den zweiten Laserspiegel (74) umgelenkten Laserstrahl (68) angeordnet ist und der von diesem umgelenkten Laserstrahl (68) auf der Nickachse (18) getroffen wird, so daß er den Laserstrahl längs der Nickachse (18) radial auswärts umlenkt und
- an dem Nickrahmen (28) ein vierter Laserspiegel (80) gehaltert ist, der senkrecht zu der von Nickachse (18) und objektseitigem Abschnitt der optischen Achse (42) aufgespannten Ebene unter 45° zu der Nickachse (18) angeordnet ist, so daß er von dem längs der Nickachse radial auswärts umgelenkten Laserstrahl (68) getroffen wird und den Laserstrahl (68) seitlich von dem abbildenden optischen System in eine zu dem Abschnitt der optischen Achse (42) parallele Richtung umgelenkt wird.

2. Vorrichtung nach Anspruch 1, **dadurch gekennzeichnet, daß**
(a) das abbildende optische System (34) nickrahmenfeste erste Strahlenumlenkmittel (38) enthält, durch welche der Abbildungsstrahlengang des abbildenden optischen Systems (34) in Richtung der Nickachse (18) umlenkbar ist, und
(b) das abbildende optische System (34) weiterhin rollrahmenfeste zweite Strahlenumlenkmittel (46,48,50) enthält, durch welche der umgelenkte Strahlengang (44) längs der Nickachse (18) aufgenommen und in Richtung der Rollachse (16) umgelenkt wird.

3. Vorrichtung nach Anspruch 2, **dadurch gekennzeichnet, daß**
(a) die ersten Strahlenumlenkmittel von einer durch den Schnittpunkt (20) von Roll- und Nickachse (16 bzw. 18) gehenden, unter 45° zu der Nickachse (18) und der objektseitigen optischen Achse (42) des abbildenden optischen Systems (34) angeordneten ersten reflektierenden Fläche (38) gebildet sind,
(b) die zweiten Strahlenumlenkmittel
- eine zweite reflektierende Fläche (46) aufweisen, die von der Nickachse (18) durchstoßen wird, senkrecht zu der von Roll- und Nickachse (16 bzw. 18) aufgespannten Ebene ist und mit der Nickachse (16) einen Winkel von 45° bildet,
- eine dritte reflektierende Fläche (48), die in dem von der zweiten reflektierenden Fläche (46) umgelenkten Strahlengang (52) senkrecht zu der zweiten reflektierenenden Fläche (46) angeordnet ist und
- eine vierte reflektierende Fläche (50), die in dem von der dritten reflektierenden Fläche (48) umgelenkten Strahlengang (54) parallel zu der dritten reflektierenenden Fläche (48) angeordnet ist und von der Rollachse (16) durchstoßen ist.

4. Vorrichtung nach Anspruch 3, **dadurch gekennzeichnet, daß** auf der Rollachse (16) eine strukturfeste, unter 45° zur Rollachse (16) angeordnete, fünfte reflektierende Fläche (60) vorgesehen ist, durch welche der Strahlengang des abbildenden optischen Systems (34) auf den seitlich von der Rollachse (16) angeordneten Sensor (62) umlenkbar ist.

5. Vorrichtung nach Anspruch 4, **dadurch gekennzeichnet, daß** zwischen der vierten und der fünften reflektierenden Fläche (48 bzw. 50) im Rollrahmen (22) eine Linsenoptik (58) als Teil des abbildenden optischen Systems (34) angeordnet ist.

6. Vorrichtung nach Anspruch 5, **dadurch gekennzeichnet, daß** eine weitere Linse (64) des abbildenden optischen Systems (34) zwischen der fünften reflektierenden Fläche (60) und dem Sensor (62) angeordnet ist.

7. Vorrichtung nach einem der Ansprüche 1 bis 6, **dadurch gekennzeichnet, daß**
(a) das abbildende optische System (34) eine die objektseitige optische Achse (42) definierendes, nickrahmenfestes Primärobjektiv (36) aufweist und
(b) das Laser-Spiegelsystem (70) den Laserstrahl (68) seitlich an diesem Primärobjektiv (36) vorbeileitet.

8. Vorrichtung nach Anspruch 7, **dadurch gekennzeichnet, daß**
(a) ein Teilstrahl des ausgesandten Laserlichts durch in einen Teil des Laserstrahls ragende bündelumkehrende Mittel (88.90) antiparallel auf das Primärobjektiv (36) geleitet wird, derart daß durch diesen Teilstrahl durch das abbildende optische System (34) ein Lichtfleck in der Ebene des Sensors (62) erzeugt wird, und
(b) in dem Laser-Spiegelsystem (70) Ausrichtmittel (82,94,96) vorgesehen sind, die von einer Abweichung des Lichtflecks von einer Sollposition absteuerbar sind und durch welche der Laserstrahl (68) genau parallel zu der objektseitigen optischen Achse (42) ausrichtbar ist.

9. Vorrichtung nach Anspruch 8, **dadurch gekennzeichnet, daß** die bündelumkehrenden Mittel zwei zueinander senkrechte, reflektierende Flächen (88,90) aufweisen, von denen eine in den Laserstrahl (68) und die andere in den objektseitigen Strahlengang des abbildenden optischen Systems (34) eintaucht, so daß ein an der einen Fläche (88) reflektierter Teil des Laserstrahls (68) durch die andere Fläche (90) antiparallel zu dem Laserstrahl (68) in den Strahlengang des abbildenden optischen Systems (34) eingespiegelt wird.

10. Vorrichtung nach Anspruch 8 oder 9, **dadurch gekennzeichnet, daß** die Ausrichtmittel von einem durch Piezosteller (94,96) mit zwei Freiheitsgraden winkelverstellbaren Spiegel (82) gebildet sind, über den der Laserstrahl (68) geleitet wird.

11. Vorrichtung nach einem der Ansprüche 1 bis 10, **dadurch gekennzeichnet, daß**
(a) der strukturfeste Laser (66) mit seiner Strahlrichtung im wesentlichen parallel zu der Rollachse (16) in seitlichem Abstand von dieser ausgerichtet ist,
(b) das Laser-Spiegelsystem (70) einen fünften, strukturfesten Laserspiegel (82) aufweist, der im wesentlichen senkrecht zu der von der Achse des Laserstrahls (68) und der Rollachse (16) aufgespannten Ebene unter 45° zu der Richtung des Laserstrahls (68) angeordnet ist, so daß er den Laserstrahl (68) zu der Rollachse (16) umlenkt,
(c) ein sechster Laserspiegel (84) strukturfest senkrecht zu der von der Achse des Laserstrahls (68) und der Rollachse (16) aufgespannten Ebene unter 45° zu der Richtung des umgelenkten Laserstrahls (68) angeordnet ist und von diesem im wesentlichen auf der Rollachse (16) getroffen wird, so daß er den Laserstrahl (68) um 90° auf den ersten Laserspiegel (72) umlenkt.

12. Vorrichtung nach den Ansprüchen 4 und 11, **dadurch gekennzeichnet, daß** die fünfte reflektierende Fläche (60) und der sechste Laserspiegel (84) im wesentlichen in einer Ebene liegen.

13. Vorrichtung nach einem der Ansprüche 1 bis 12, **dadurch gekennzeichnet, daß** der Träger (76) für den ersten und zweiten Laserspiegel (72 bzw. 74) durch einen gesonderten Antrieb dem Rollrahmen (22) nachführbar ist.

14. Vorrichtung nach einem der Ansprüche 1 bis 13, **dadurch gekennzeichnet, daß** ein strukturfester, sphärischer Dom (12) zu dem Schnittpunkt (20) von Nick- und Rollachse (16 bzw. 18) zentriert ist.

15. Vorrichtung nach Anspruch 14, **dadurch gekennzeichnet, daß** zwischen dem vierten Laserspiegel (80) und dem Dom (12) im Strahlengang des Laserstrahls (68) eine außeraxiale Korrekturlinse (98) zur Korrektur des durch den Dom (12) hervorgerufenen Linsenfehlers angeordnet ist.

## Claims

1. Optical sensor assembly comprising: a sensor, an imaging optical system, which defines a sensor path of rays with an optical axis and which is directed to an object scenario located on the object-side section of the optical axis, a laser emitter, which emits a laser beam parallel to the optical axis of the sensor pat of rays, and a roll-pitch gimbal assembly (14) is provided having a roll gimbal (22) rotatable about a roll axis (16) relative to a structure (10), and a pitch gimbal which is rotatable relative to the roll gimbal (22) about a pitch axis (18) orthogonal to the roll axis (16),
**characterised in that**
(a) the sensor is structure-fixed,
(b) the imaging optical system (34) comprises beam deflecting means (38) on the roll-pitch gimbal assembly (14), the sensor beam of rays being guided by the beam deflecting means in one section along the pitch axis (18) and in another section in a beam incidence direction along the roll axis (16), such that, in each position of the roll-pitch gimbal assembly (14), an image of the object scenario can be generated on the structure-fixed sensor (62),
(c) the laser emitter (66) is also structure-fixed,
(d) a laser mirror system (70) is arranged on the roll-pitch gimbal assembly, wherein
- the laser beam of the laser emitter, in one section, propagates along the extension of the beam incidence direction in the optical system along the roll axis (16)
- a first and a second laser mirror (72 and 74, respectively) are mounted on a carrier (76) rotatable together with the roll gimbal,
- the first laser mirror (72) being traversed by the roll axis and being inclined relative thereto by 45°, such that the laser beam (68) impnges upon this first laser mirror (72) along the roll axis (16) and, thereby, is deflected by 90° radially towards the second laser mirror (74),
- the plane of the second laser mirror (74) being perpendicular to that of the first laser mirror (72), such that the laser beam (68) is deflected by 90° and propagates parallel to the roll axis (16) at a distance therefrom,
- a third laser mirror (76) being mounted in the roll gimbal, the plane of the third mirror being perpendiculat to a plane defined by roll and pitch axes (16 and 18, respectively) and exten'din at 45° relative to the laser beam (68) deflected by the second laser mirror (74), the third laser mirror being hit by this deflected laser beam (68) on the pitch axis (18), such that the laser beam is deflected radially outwardly along the pitch axis (18), and
- a fourth laser mirror (80) being mounted on the pitch gimbal (28), the fourth laser mirror being perpendicular to the plane defined by the pitch axis (18) and the object-side section of the optical axis (42) and arranged at 45° relative to the pitch axis (18), such that it is hit by the laser beam (68) deflected radially outwards along the pitch axis and is deflected laterally of the imaging optical system into a direction parallel to the section (42) of the optical axis (42).

2. Device according to claim 1, **characterised in that**
(a) the imaging optical system (34) comprises ptch gimbal-fixed first beam deflecting means (38). arranged to deflect the imaging path of rays of the imaging optical system (34) into the direction of the pitch axis (18), and
(b) furthermore, the imaging optical system (34) comprises roll gimbal-fixed second beam deflecting means (46,48,50) arranged to receive the deflected path of rays (44) along the pitch axis (18) and to deflect it along the roll axis (16).

3. Device according to claim 2, **characterised in that**
(a) the first beam deflecting means are formed by a first reflecting surface passing through the intersection (20) of roll and pitch axes (16 and 18, respectively), and arranged at 45° with respect to the pitch axis and the object-side optical axis (42) of the imaging optical system (34),
(b) the second beam deflecting means
- comprise a second reflecting surface (46), which is traversed by the pitch axis (18), is perpendicular to the plane defined by roll and pitch axes (16 and 18, respectively) and forms an angle of 45° with the pitch axis (16)
- a third reflecting surface (48), which is arranged in the path of rays deflected by the second reflecting surface and perpendicular to the second deflecting surface, and
- a fourth reflecting surface (50), which is arranged in the path of rays deflected by the third reflecting surface (48) and parallel to the third reflecting surface (48) and which is traversed by the roll axis (16).

4. Device according to claim 3, **characterised in that** a structure-fixed fifth reflecting surface (60) is provided on the roll axis (16) and arranged at 45° with respect to the roll axis (16), this fifth reflecting surface being arranged to deflect the path of rays to a sensor (62) arranged laterally of the roll axis (16).

5. Device as claimed in claim 4, **characterised in that** a lens system is arranged between the fourth and fifth reflecting surfaces (48 and 50, respectively), which lens system is part of the imaging optical system.

6. Device according to claim 5, **characterised in that** a further lens (64) of the imaging optical system (34) is arranged between the fifth reflecting surface (60) and the sensor (62).

7. Device according to any one of the claims 1 to 6, **characterised in that**
(a) the imaging optical system (34) comprises a pitch gimbal-fixed primary objective (36) defining an object-side optical axis (42), and
(b) the laser mirror system (70) directs the laser beam (68) to laterally pass by this primary objective (36).

8. Device according to claim 7, **characterised in that**
(a) by beam reversing means (88,90) extending into part of the laser beam, a partial beam of the emitted laser light is directed anti-parallel onto the primary objective (36), such that the imaging optical system (34) generates, from this partial beam, a light spot in the plane of the sensor (62), and
(b) adjusting means (82,94,96) are provided in the laser mirror system, which are controlled by a deviation of the light spot from its desired position, which adjusting means serve to align the laser beam (68) exactly parallel to the object-side optical axis (42).

9. Device as claimed in claim 8, **characterised in that** the beam reversing means comprise two mutually perpendicular reflecting surfaces (88,90) of which one extends into the laser beam (68) and the other one extends into the object-side path of rays of the imaging optical system (34), such that a portion of the laser beam (68) reflected by said one surface (88) is reflected anti-parallel to the laser beam (68) into the path of rays of the imaging optical system (34).

10. Device according to claim 8 Or 9, **characterised in that** the adjusting means consist of a mirror (82) angularly adjustable with two degrees of freedom by means of piezo-actuators(94,96), the laser beam (68) being reflected by this mirror.

11. Device according to any one of the claims 1 to 10, **characterised in that**
(a) the beam direction of the structure-fixed laser (66) is aligned substantially parallel to the roll axis (16) and laterally spaced therefrom,
(b) the laser mirror system (70) has a fifth structure-fixed laser mirror (82) which extends substantially perpendicular to the plane defined by the axis of the laser beam (68) and the roll axis (16) and at 45° with respect to the direction of the laser beam (68), such that it deflects the laser beam (68) towards the roll axis (16),
(c) a sixth laser mirror (84) extends structure-fixed perpendicular to the plane defined by the axis of the laser beam (68) and the roll axis (16) at 45° with respect to the direction of the deflected laser beam (68) and is hit by the laser beam substantioally on the roll axis, such that it deflects the laser beam (68) by 90° onto the first laser mirror (72).

12. Device according to the claims 4 and 11, **characterised in that** the fifth reflecting surface (60) and the sixth laser mirror (84) lie substantially in one plane.

13. Device according to any one of the claims 1 to 12, **characterised in that** the carrier (76) for the first and second laser mirrors (72 and 74, respectively) is caused to follow-up the roll gimbal (22) by a separate drive.

14. Device according to any one of the claims 1 to 13, **characterised in that** a structure-fixed spherical dome (12) is centred to the intersection (20) of pitch and roll axes (16 and 18, respectively).

15. Device according to claim 14, **characterised in that** an off-axis corrective lens (98) is arranged between the fourth laser mirror (80) and the dome (12) in the path of rays of the laser beam (68) to correct for lens aberration caused by the dome (12).

## Revendications

1. Disposition de capteur optique, comprenant : un capteur, un système optique de reproduction définissant une marche de rayons de capteur présentant un axe optique et dirigé sur une scène d'objet se trouvant sur la section de l'axe optique située du côté objet, un émetteur laser émettant un rayon laser parallèle à l'axe optique de la marche des rayons du capteur, et une disposition en cadre de roulis et de tangage (14) munie d'un cadre de roulis (22) susceptible de tourner autour d'un axe de roulis (16) par rapport à une structure (10) et d'un cadre de tangage susceptible de pivoter par rapport au cadre de roulis (22) autour d'un axe de tangage (18) perpendiculaire à l'axe de roulis (16),
**caractérisée en ce que**
(a) le capteur (62) est disposé fixement par rapport à la structure,
(b) le système optique de reproduction (34) comprend, sur la disposition en cadre de roulis et de tangage (14), des moyens de déviation de rayons (38) permettant de guider la marche des rayons du capteur, dans une section, le long de l'axe de tangage (18) et, dans une autre section, dans un sens d'incidence des rayons le long de l'axe de roulis (16) de sorte qu'une image de la scène d'objet est susceptible d'être générée sur la capteur (62) fixe par rapport à la structure grâce au système optique, quelle que soit la position de la disposition en cadre de roulis et de tangage (14),
(c) l'émetteur laser (66) est également disposé fixement par rapport à la structure et
(d) un système de miroirs laser (70) est disposé sur la disposition en cadre de roulis et de tangage (14), système dans lequel
- le rayon laser de l'émetteur laser s'étend, dans une section, dans le prolongement du sens d'incidence des rayons dans le système optique le long de l'axe de roulis (16),
- un premier et un deuxième miroir laser (72 et 74 respectivement) sont disposés sur un support (76) susceptible de pivoter avec le cadre de roulis,
- le premier miroir laser (72) étant traversé par l'axe de roulis (16) et étant incliné à (45°) par rapport à ce dernier de sorte que le rayon laser (68) frappe le long de l'axe de roulis (16) ce premier miroir laser (72) et est dévié par celui-ci radialement de 90° vers le deuxième miroir laser (74),
- le plan du deuxième miroir laser (74) s'étendant perpendiculairement à celui du premier miroir laser (72) de sorte que le rayon laser (68) est dévié de 90° et s'étend parallèlement à l'axe de roulis (16) avec un écart par rapport à celui-ci,
- un troisième miroir laser (76) étant maintenu dans le cadre de roulis, miroir dont le plan est disposé perpendiculairement par rapport au plan délimité par les axes de tangage et de roulis (16 et 18 respectivement) et à 45° par rapport au rayon laser (68) dévié par le deuxième miroir laser (74), et le rayon laser (68) dévié par celui-ci étant frappé par l'axe de tangage (18) de sorte qu'il dévie le rayon laser le long de l'axe de tangage (18) radialement vers l'extérieur et
- un quatrième miroir laser (80) étant maintenu sur le cadre de tangage (28), miroir qui est disposé à 45° par rapport à l'axe de tangage (18) perpendiculairement au plan délimité par l'axe de tangage (18) et la section située côté objet de l'axe optique (42) de sorte qu'il est frappé par le rayon laser (68) dévié le long de l'axe de tangage radialement vers l'extérieur et que le rayon laser (68) est dévié latéralement par le système optique de reproduction dans un sens parallèle à la section de l'axe optique (42).

2. Dispositif selon la revendication 1, **caractérisé en ce que**
(a) le système optique de reproduction (34) comprend des premiers moyens de déviation de rayons (38), fixes par rapport au cadre de tangage, grâce auxquels la marche des rayons de reproduction du système optique de reproduction (34) est susceptible d'être déviée dans le sens de l'axe de tangage (18), et
(b) le système optique de reproduction (34) comprend en outre des deuxièmes moyens de déviation de rayons (46,48,50), fixes par rapport au cadre de roulis, grâce auxquels la marche des rayons déviée (44) est captée le long de l'axe de tangage (18) et déviée dans le sens de l'axe de roulis (16).

3. Dispositif selon la revendication 2, **caractérisé en ce que**
(a) les premiers moyens de déviation de rayons sont formés par une première surface réfléchissante (38) traversant le point d'intersection (20) des axes de tangage et de roulis (16 et 18 respectivement) et disposée à 45° par rapport à l'axe de tangage (18) et l'axe optique (42) situé du côté objet du système optique de reproduction (34),
(b) les deuxièmes moyens de déviation de rayons présentent
- une deuxième surface réfléchissante (46) traversée par l'axe de tangage (18) qui est perpendiculaire au plan délimité par les axes de roulis et de tangage (16 et 18 respectivement) et forme, avec l'axe de tangage (16), un angle de 45°,
- une troisième surface réfléchissante (48) disposée, perpendiculairement à la deuxième surface réfléchissante (46), dans la marche des rayons (52) déviée par la deuxième surface réfléchissante (46) et
- une quatrième surface réfléchissante (50) disposée, parallèlement à la troisième surface réfléchissante (48), dans la marche des rayons (54) déviée par la troisième surface réfléchissante (48) et traversée par l'axe de roulis (16).

4. Dispositif selon la revendication 3, **caractérisé en ce qu'**une cinquième surface réfléchissante (60) fixe par rapport à la structure et disposée à 45° par rapport à l'axe de roulis (16), grâce à laquelle la marche des rayons du système optique de reproduction (34) est susceptible d'être déviée sur le capteur (62) disposé latéralement par rapport à l'axe de roulis (16), est prévue sur l'axe de roulis (16).

5. Dispositif selon la revendication 4, **caractérisé en ce qu'**une optique à lentille (58) faisant partie du système optique de reproduction (34) est disposée dans le cadre de roulis (22) entre la quatrième et la cinquième surface réfléchissante (48 et 50 respectivement).

6. Dispositif selon la revendication 5, **caractérisé en ce qu'**une autre lentille (64) du système optique de reproduction (34) est disposée entre la cinquième surface réfléchissante (60) et le capteur (62).

7. Dispositif selon l'une quelconque des revendications 1 à 6, **caractérisé en ce que**
(a) le système optique de reproduction (34) présente un objectif primaire (36), fixe par rapport au cadre de tangage, définissant l'axe optique (42) situé du côté objet et
(b) le système de miroirs laser (70) fait passer le rayon laser (68) sur le côté de cet objectif primaire (36).

8. Dispositif selon la revendication 7, **caractérisé en ce que**
(a) un rayon partiel de la lumière laser émise est guidé par des moyens d'inversion de faisceau (88,90) pénétrant à l'intérieur d'une partie du rayon antiparallèlement sur l'objectif primaire (36) de sorte qu'une tache de lumière est générée dans le plan du capteur (62) par ce rayon partiel par le système optique de reproduction (34), et
(b) des moyens d'orientation (82,94,96) sont prévus dans le système de miroirs laser (70), moyens étant susceptibles d'être commandés grâce à la déviation de la tache de lumière par rapport à une position de consigne et grâce auxquels le rayon laser (68) est susceptible d'être orienté exactement parallèlement à l'axe optique (42) situé du côté objet.

9. Dispositif selon la revendication 8, **caractérisé en ce que** les moyens d'inversion de faisceau présentent deux surfaces réfléchissantes (88,90) perpendiculaires l'une à l'autre, dont l'une pénètre à l'intérieur du rayon laser (68) et l'autre à l'intérieur de la marche des rayons, située du côté objet, du système optique de reproduction (34) de sorte qu'une partie du rayon laser (68) réfléchie sur l'une des surfaces (88) est réfléchie à l'intérieur de la marche des rayons du système optique de reproduction (34) par l'autre surface (90) antiparallèlement au rayon laser (68).

10. Dispositif selon la revendication 8 ou 9, **caractérisé en ce que** les moyens d'orientation sont formés par un miroir (82) permettant de guider le rayon laser (68) et dont le réglage angulaire s'effectue grâce à des translateurs piézoélectriques (94,96) à deux degrés de liberté.

11. Dispositif selon l'une des revendications 1 à 10, **caractérisé en ce que**
(a) le laser fixe par rapport à la structure (66) est orienté avec son sens de rayonnement sensiblement parallèlement à l'axe de roulis (16) en étant écarté latéralement de celui-ci,
(b) le système de miroirs laser (70) présente un cinquième miroir laser (82) fixe par rapport à la structure qui est disposé sensiblement perpendiculairement au plan délimité par l'axe du rayon laser (68) et l'axe de roulis (16) à 45° par rapport au sens du rayon laser (68) de sorte qu'il dévie le rayon laser (68) par rapport à l'axe de roulis (16),
(c) un sixième miroir laser (84) est disposé fixement par rapport à la structure, perpendiculairement au plan délimité par l'axe du rayon laser (68) et l'axe de roulis (16), à 45° par rapport au sens du rayon laser (68) dévié, et est frappé par celui-ci sensiblement sur l'axe de roulis (16) de sorte qu'il dévie le rayon laser (68) de 90° sur le premier miroir laser (72).

12. Dispositif selon les revendications 4 et 11, **caractérisé en ce que** la cinquième surface réfléchissante (60) et le sixième miroir laser (84) se trouvent sensiblement dans un seul plan.

13. Dispositif selon l'une quelconque des revendications 1 à 12, **caractérisé en ce que** le support (76) pour le premier et le deuxième miroir laser (72 et 74 respectivement) peut poursuivre le cadre de roulis (22) grâce à un moteur séparé.

14. Dispositif selon l'une quelconque des revendications 1 à 13, **caractérisé en ce qu'**un dôme sphérique (12) fixe par rapport à la structure est centré par rapport au point d'intersection (20) des axes de tangage et de roulis (16 et 18 respectivement).

15. Dispositif selon la revendication 14, **caractérisé en ce qu'**une lentille de correction (98) extra-axiale destinée à corriger le défaut de lentille causé par le dôme (12) est disposée entre le quatrième miroir laser (80) et le dôme (12) dans la marche des rayons du rayon laser (68).
